Europäisches Patentamt

European Patent Office

Office européen des brevets

(19)

(11) Veröffentlichungsnummer: **0 001 286**
**B1**

(12) **EUROPÄISCHE PATENTSCHRIFT**

(21) Anmeldenummer: **78100951.9**

(22) Anmeldetag: **21.09.78**

(51) Int. Cl.³: **C 03 C 2 5/02, B 24 D 3/34**

(54) Verfahren zum Imprägnieren von Armierungsfasern, Armierungsgeweben, Vliesen od.dgl.

(30) Priorität: **23.09.77 AT 6822/77**

(43) Veröffentlichungstag der Anmeldung:
**04.04.79 Patentblatt 79/07**

(45) Bekanntmachung des Hinweises auf die Patenterteilung:
**23.07.80 Patentblatt 80/15**

(84) Benannte Vertragsstaaten:
**CH DE FR GB NL SE**

(56) Entgegenhaltungen:
DE - A - 1 669 960
DE - A - 2 043 728
DE - A - 2 418 905
FR - A - 1 415 120
US - A - 3 321 414

(73) Patentinhaber:
**Tyrolit Schleifmittelwerke**
**Swarovski KG**
**Swarovskistrasse 33**
**A - 6130 Schwaz (AT)**

(72) Erfinder: **Pichler, Herwig**
**Anton Öfner Strasse 15**
**A - 6130 Schwaz (AT)**
**Helletsberger, Harald, Dr.**
**Bozner Strasse 13**
**A - 6112 Wattens (AT)**
**Geissler, Ernst**
**Anton Öfner Strasse 13**
**A - 6130 Schwaz (AT)**
**Ofer, Heinrich**
**Schnittlauchgasse 26**
**A - 6134 Vomp (AT)**
**Fügenschuh, Bernhard**
**Buchenstrasse 2**
**A - 6064 Rum (AT)**

(74) Vertreter: **Torggler, Paul**
**Patentanwälte**
**Dr. Paul Torggler**
**Dr. Engelbert Hofinger**
**Wilhelm-Greil-Strasse 16**
**A - 6020 Innsbruck (AT)**

Courier Press, Leamington Spa, England.

Verfahren zum Imprägnieren von Armierungsfasern, Armierungsgeweben, Vliesen od.dgl.

Die Erfindung bezieht sich auf ein Verfahren zum Imprägnieren von Armierungsfasern, Armierungsgeweben, Vliesen od.dgl. wobei die Fasern mit einem Harz ummantelt werden.

Die Deutsche Offenlegungsschrift 1 669 960 erwähut, dass zur Erhöhung der Festigkeit und der Sprenggeschwindigkeit von Schleifscheiben, insbesondere von solchen, die beim Handschleifen Verwendung finden, Gewebeeinlagen, beispielsweise aus Glasfasergeweben, zur Armierung verwendet werden. Reine unimprägnierte Gewebe haften jedoch in der Schleifmittelmasse sehr schlecht oder überhaupt nicht. Es ist daher notwendig, die Gewebe vor dem Einlegen in die Schleifmittelmasse mit einem Harz zu imprägnieren. Es kommt dabei zu einer Verbindung der Schleifmittelmasse mit den Fasern des Armierungsgewebes in zwei Stufen, und zwar einmal die Verklebung des Harzes mit der Faser, beispielsweise einer Glasfaser, und zweitens die Verbindung des Harzes mit dem Bindemittel der Schleifmasse. Soll die Armierung ihre Aufgabe erfüllen, darf es bei diesen Verbindungen selbstverständlich keine Schwachstellen geben.

Die Anforderungen sind eine einwandfreie Kraftübertragung von der Schliefmittelmasse auf das Armierungsgewebe in der fertigen Scheibe, eine ausreichende Grünfestigkeit der unausgehärteten Scheibe, die eine gewisse Klebrigkeit des Harzes voraussetzt und eine gewisse Geschmeidigkeit des unausgehärteten Gewebes, insbesondere bei dünnen Schleifscheiben. Als Armierungsharze können Phenolharze und Epoxydharze Verwendung finden. Im allgemeinen verwendet man modifizierte Phenolharze, da Phenolharze schlechte Hafteigenschaften am Glas besitzen. Andererseits weisen Phenole jedoch eine gute Temperaturfestigkeit auf. Epoxydharze und Acetatharze weisen eine gute Haftung an der Glasfaser auf, sind jedoch teuer und haben nur schlechte Temperaturstandfestigkeit. Bei der Auswahl kommt es daher im allgemeinen zu Kompromissen, d.h. zu einer Kombination verschiedener Harze.

Nach den bekannten Verfahren wird das zu imprägnierende Gewebe bzw. werden die Fasern mit einer Harzlösung, die einen Harzgehalt von ca. 70% aufweist, getränkt. Das überschüssige Harz wird zwischen Walzen abgequetscht. Sodann wird das Armierungsgewebe während ca. 1 Minute in einem Durchlaufofen bei ca. 140°C getrocknet. Während des Trocknens wird der Lösungsmittelgehalt von ca. 30% auf ca. 5% bezogen auf das Harz, reduziert.

Die Nachteile des bekannten Verfahrens sind die folgenden: wenn z.B. 60 kg Alkohol als gängigstes Lösungsmittel pro Stunde verdampft werden, dann erfordert dies bei Einhaltung der Explosionsgrenzen mindestens ca. 3000 m³ Heißluft von ca. 150°C. Diese Luftmenge mußsodann wegen der Umweltschutzbestimmungen in einer weiteren Nachverbrennungsanlage auf ca. 700°C weiter aufgeheizt werden. Die Kosten für die notwendigen Anlagen, insbesondere für die Nachverbrennungsanlagen, sind sehr hoch, außerdem ist es wiederum aus Gründen des Umweltschutzes nicht möglich, die auf 700°C erhitzte Luft ungekühlt aus der Anlage herauszulasen.

Lösungsmittelärmere Systeme bzw. Lösungsmittel Systeme mit hohem Wassergehalt haben sich bisher nicht bewährt.

Der Trocknungswirkungsgrad ist gering, da sich durch die Heißlufttrocknung zuerst eine die Lösungsmittelverdampfung behindernde Haut an der Harzoberfläche bildet.

Die Phenolharze haften, wie bereitserwähnt, nicht besonders gut an der Glasfaser und andere Imprägnierungen sind viel zu teuer. Als Lösungsmittel käme rein theoretisch Wasser ($H_2O$) in Betracht, ist aber rein in der Praxis nicht verwendbar. Verwendbare Lösungsmittel sind beispielsweise Alkohole und Azeton. Die Nachteile ergeben sich daraus, daß Alkohole und Azetone toxisch und brennbar sind und explosionsgefährdende Dämpfe bilden.

Im allgemeinen werden Gemische von Lösungsmitteln verwendet.

Das Grundproblem beim bekannten Verfahren ist darin zu sehen, daß große Lösungsmittelmengen entfernt werden müssen. Unter großen Lösungsmittelmengen wird eine Menge von ca. 30% der aufgetragenen Imprägniermasse verstanden.

Wegen der ansonsten in der Anlage vorhandenen Explosionsgefahr darf der Anteil der Alkohole in der Luft einen Wert von ca. 20 $g/m^3$ nicht übersteigen. Bei diesem Verhältnis ist jedoch der Alkohol nicht mehr brennbar, was hinter der eigentlichen Imprägnieranlage eine Nachverbrennungsanlage notwendig macht.

Das erfindungsgemäße Verfahren löst die aufgezeigten Probleme dadurch, daß ca. 5 bis 50% der gewünschten Endmenge des Harzes auf die Fasern aufgetragen werden, indem die Fasern in einem dünnflüssigen Harz bzw. in einer dünnflüssigen Harzlösung getränkt werden, worauf 50 bis 95% des Harzes in Pulverform auf die getränkten Fasern aufgetragen werden, worauf die Fasern erwärmt werden, um ein Verschmelzen bzw. Sintern des Harzmantels zu erzielen.

Vorteilhaft ist vorgesehen, daß eine Harzlösung zum Tränken der Fasern eingesetzt wird, in der die Harzmenge 10 bis 25% der gewünschten Endmenge beträgt.

Ein weiteres Ausführungsbeispiel der Erfindung sieht vor, daß das pulverförmig auf die Fasern aufgetragene Harz in mehreren Schichten aufgetragen wird, und dabei können die Schichten aus unterschiedlichen Harzen bestehen. Gute Erfolge wurden damit erzielt, daß das in Lösung und das in Pulverform aufgetragene Harz verschiedene Harze sind.

Als Pulver können auch reine Novolak-Harze ohne Härtemittel, beispielsweise Hexamethylentetramin, eingesetzt werden.

Als Flüssigkeiten bzw. Harzlösung für die Primärimprägnierung kommen erfindungsgemäß in Betracht: Phenolharze von Rezoltyp, Epoxydharze, Lösungen von Phenolharzen, Epoxydharzen und Acetalharzen.

Dadurch ergibt sich eine bessere Lagerfähigkeit der Gewebe und ein besseres Verschleißverhalten beim Schleifprozeß. Erfindungsgemäß können sowohl Epoxydals auch Phenolharze zusammen verwendet werden. Als besonders vorteilhaft hat sich das Verfahren der elektrostatischen Beschichtung für das Auftragen des pulverförmigen Harzes auf die mit einer Harzlösung getränkten Fasern erwiesen.

Das Erwärmen der Fasern und das Verschmelzen, eigentlich Sintern des Harzmantels, erfolgt vorteilhaft durch Hochfrequenz Ferhitzung.

Das Verhältnis von Menge und Harzgehalt der flüssigen Vorimprägnierung zur pulverförmigen Hauptimprägnierung (Beschichtung) wird so gewählt, daß nur ca. 5 bis 10% Lösungsmittel (bezogen auf Gesamtimprägnierung) auf das Armierungsgewebe aufgebracht werden.

Die Wärmebehandlung dient zur Homogenisierung und zum Fixieren des Harzmantels und nicht zum Trocknen, wobei allerdings ungefähr die Hälfte des Lösungsmittels verdampft.

Die 2-5 %igen Lösungsmittelreste sind zur Erhaltung der Klebrigkeit des Harzes notwendig.

Der Vorgang der Faserbehandlung bzw. Gewebebehandlung, ist wie folgt: das Armierungsgewebe, beispielsweise in Glasfasergewebe, wird mit einer sehr dünnflüssigen Harzlösung wie bei den bekannten Verfahren getränkt. Die aufgetragene Harzmenge beträgt aber nur ca. 5 bis 50% der gewünschten Endmenge. Es ist also die Verwendung von Spezialharzen, auch sehr teuren Harzen möglich.

Nach dem Tränken des Gewebes werden die restlichen 50 bis 95% der Beharzung in Pulverform, und zwar beispielsweise durch elektrostatische Beschichtung aufgebracht.

Daraufhin erfolgt das Erwärmen des Gewebes bis zum Verschmelzen bzw. Sintern des Harzmantels bei beispielsweise Temperaturen von ca. 70 bis 100°C. Vorteilhaft ist hier die Hochfrequenzerhitzung, weil dadurch eine rasche und gleichmäßige Durchwärmung des Querschnittes erfolgt.

Die zum Tränken des Gewebes verwendete zuerst aufgetragene Harzlösung wird so gewählt, daß die verbleibende Lösungsmittelmenge ungefähr dem beim Endprodukt gewünschten flüchtigen Anteilen entspricht.

Die Vorteile des erfindungsgemäßen Verfahrens sind die folgenden:

starke Verringerung des lösungsmittelbedarfes und der entstehenden Abgasmenge auf ca. 5 bis 10% des Lösungsmittelbedarfs, der für eine herkömmliche Imprägnierung nötig wäve. Verbesserung der Abbindung der Armierungsgewebe in den Schleifkörpern durch Mehrschichtimprägnierung (z.B. Epoxy-Phenol);

schwerflüchtige Lösungsmittelsysteme können verwendet werden; dadurch wird die Lagerfähigkeit des imprägnierten Gewebes erhöht.

Möglichkeit, dem Beschichtungspulver sofort schleifaktive Füllstoffe, beispielsweise Kryolit oder Sulfide, beizumischen;

geringerer Heißluft-und damit geringerer Energiebedarf;

die Möglichkeit, mit einer kleineren Nachverbrennungsanlage als bei den kerkömmlichen Verfahren auszukommen;

bei entsprechenden Lösungsmittelsystemen kann die Nachverbrennungsanlage überhaupt entfallen, was eine enorme Kostenreduzierung bei der Gesamtanlage mit sich bringt;

besserer Trocknungs- und Erwärmungswirkungsgrad; geringerer Platzbedarf der Anlage.

Beim erfindungsgemäßen Verfahren kommt es auch zu einem besseren Wärmeübergang als bei den herkömmlichen Verfahren. Vor allem entfällt die Bildung eines Oberflächenfilmes bzw. Blasen im Harzmantel.

Ein weiterer Vorteil der Erfindung:

Zur Armierung von Schleifscheiben werden vorteilhaft weitmaschige Gewebe in symmetrischer Webart z.B. Leinwandbindung bzw. Panamabindung verwendet werden, da andere Gewebearten (z.B. Drehergewebe) leicht zum Verzug, insbesondere dünner Schleifkörper führen.

Wegen der geringen Schiebefestigkeit der symmetrischen Gewebe im ungetrockneten Zustand müssen diese auf sehr langen und daher teuren Horizontalspannrahmen getrocknet werden. Dabei kommt es wegen der großen, dünnflüssigen Harzmengen zu einem Durchsacken des Harzmantels, sodaß die Gewebeunterseite eine wesentlich dickere Harzschichte als die Gewebeoberseite erhält.

Dies trifft bei der Erfindung wegen der geringen flüssigen Lösungsmengen nicht zu. Außerdem können kurze Spannrahmen verwendet werden.

Asuführungsbeispiel:

Rohgewebe    Flächengewicht    50    g/m2

Gwebe in Panamawebung
gewünschte flüchtige Anteile      10 %

Harzanteil      31 %

Endgewicht      650 g

*Vorimprägnierung:*
Lösung Resel 70% in 15% Methylalkohol und 15% Wasser Auftrag 49 g pro m²
Harz = 70%ige Lösung

*Hauptimprägnierung:*

Novolak in Feinmahlung mit 8% Hexamethylentetramin als Härter 141 g Novolak/m²

Ungefährer Lösungsmittelverlust 10,5 g/m² entspricht 5 g Alkohol/m²

*Anlage:*

Arbeitsgeschwindigkeit 20 m/min bei 1,5 m/Arbeitsbreite

*Leistung:*

1.800 m²/Stunde

*Verdunstete Alkoholmenge:*

9,5 kg/Stunde Dazu notwendig: 500 m³ Luft

Das Gewebe wird mittels Hochfrequenz auf 90° erwärmt.

Bei einer konventionellen Anlage ist eine Imprägnierung dieser Art nur mit einer Lösung von 70% Harz, 27% Alkohol und 3% Wasser erzielbar. Die Verdunstungsmenge Alkohol ist dabei 70 g/m², das entspricht 125 kg/Stunde.

Dazu sind 6.300 m³ Luft notwendig, deren Temperatur ca. 140° C beträgt.

**Patentansprüche:**

1. Verfahren zum Imprägnieren von Armierungsfasern, Armierungsgeweben oder Vliesen, wobei die Fasern mit einem Harz ummantelt werden, dadurch gekennzeichnet, daß 5 bis 50% der gewünschten Endmenge des Harzes auf die Fasern aufgetragen werden, indem die Fasern in einem dünnflüssigen Harz bzw. in einer dünnflüssigen Harzlösung getränkt werden, worauf 50 bis 95% des Harzes in Pulverform auf die getränkten Fasern aufgetragen werden, worauf die Fasern erwärmt werden, um ein Verschmelzen bzw. Sintern des Harzmantels zu erzielen.

2. Verfahren nach Anspruch 1, dadurch gekennzeichnet, daß eine Harzlösung zum Tränken der Fasern eingesetzt wird, in der die Harzmenge 10 bis 25% der gewünschten Endmenge beträgt.

3. Verfahren nach Anspruch 1 und/oder 2, dadurch gekennzeichnet, daß als Flüssigharz bzw. als Harzlösung ein Phenolharz vom Resoltyp eingesetzt wird.

4. Verfahren nach Anspruch 1 und/oder 2, dadurch gekennzeichnet, daß als Flüssigharz ein Epoxydharz eingesetzt wird.

5. Verfahren nach Anspruch 1 und/oder 2, dadurch gekennzeichnet, daß als Harzlösung eine Lösung von Phenolharzen und/oder Epoxydharzen und/oder Acetalharzen eingesetzt wird.

6. Verfahren nach einem der Ansprüche 1 bis 5, dadurch gekennzeichnet, daß das pulverförmig auf die Fasern aufgetragene Harz in mehreren Schichten aufgetragen wird.

7. Verfahren nach Anspruch 6, dadurch gekennzeichnet, daß Schichten aus unterschiedlichen Harzen aufgetragen werden.

8. Verfahren nach einem der Ansprüche 1 bis 7, dadurch gekennzeichnet, daß in der Lösung und bei dem in Pulverform aufgetragenen Harz verschiedene Harze eingesetzt werden.

9. Verfahren nach einem der Ansprüche 1 bis 8, dadurch gekennzeichnet, daß als Pulver reine Novolak-Harze ohne Härter, insbesondere ohne Hexamethylentetramin eingesetzt werden.

10. Verfahren nach einem der Ansprüche 1 bis, 9 dadurch gekennzeichnet, daß Epoxyd- und Phenolharze zusammen eingesetzt werden.

11. Verfahren nach einem der Ansprüche 1 bis 10, dadurch gekennzeichnet, daß dem pulverförmigen Harz Füllstoffe, vorzugsweise Kryolith oder Siliziumcarbid beigemengt werden.

12. Verfahren nach Anspruch 1, dadurch gekennzeichnet, daß das Erwärmen der Fasern und das Verschmelzen bzw. Versintern des Harzmantels durch Hochfrequenzerhitzung erfolgt.

13. Verfahren nach einem der Ansprüche 1 bis 12, dadurch gekennzeichnet, daß das pulverförmige Harz bzw. die pulverförmigen Komponenten elektrostatisch aufgetragen werden.

14. Verwendung der nach einem der Ansprüche 1 bis 13 imprägnierten Armierungsfasern, Armierungsgeweben oder Vliesen in Schleifkörpern.

**Revendications**

1. Procédé pour imprégner des fibres, tissus, voiles, etc ... servant d'armatures, dans lequel les fibres sont enrobées de résine, caractérisé en ce que 5 à 50% environ de la quantité de résine souhaitée pour l'imprégnation sont appliqués aux fibres en les imprégnant d'abord avec une résine ou solution de résine très fluide, ensuite, 50 à 95% de la résine sont appliqués sous forme pulvérulente sur les fibres imprégnées et enfin les fibres sont chauffées pour provoquer la fusion ou le frittage de l'enrobage de résine.

2. Procédé selon la revendication 1, caractérisé en ce qu'on emploie pour l'imprégnation des fibres une solution de résine d'une concentration correspondant à 10—25% de la quantité de résine finale souhaitée.

3. Procédé selon la revendication 1 ou 2, caractérisé en ce qu'on emploie en tant que résine fluide ou solution de résine une résine phénolique du type résol.

4. Procédé selon la revendication 1 ou 2, caractérisé en ce qu'on emploie en tant que résine fluide une résine époxyde.

5. Procédé selon la revendication 1 ou 2, caractérisé en ce qu'on emploie en tant que solution de résine une solution de résines phénoliques et/ou de résines époxydes et/ou de résines à base d'acétals.

6. Procédé selon l'une quelconque des revendications précédentes, caractérise en ce que la résine, appliquée sur les fibres sous forme de poudre, y est appliquée en plusieurs couches.

7. Procédé selon la revendication 6, caractérisé en ce que les couches appliquées consistent en des résines différentes.

8. Procédé selon l'une quelconque des revendications précédentes, caractérisé en ce qu'on emploie, pour la solution et pour l'applications sous forme de poudre, des résines différentes.

9. Procédé selon l'une quelconque des revendications précédentes, caractérisé en ce qu'on emploie sous forme de poudre de pures novolaques, sans durcisseur, et plus particulièrement sans hexaméthylènetétramine.

10. Procédé selon l'une quelconque des revendications précédentes, caractérisé en ce qu'on emploie conjointement des résines époxydes et des résines phénoliques.

11. Procédé selon l'une quelconque des revendications précédentes, caractérisé en ce qu'on mélange à la résine pulvérulente des charges, et de préférence de la cryolithe ou du carbure de silicium.

12. Procédé selon la revendication 1, caractérisé en ce que le chauffage des fibres et la fusion ou le frittage de l'enrobage résineux sont obtenus par le chauffage à haute fréquence.

13. Procédé selon l'une quelconque des revendications précédentes, caractérisé en ce que la résine ou les composants pulvérulents sont appliqués par voie électrostatique.

14. Utilisation dans des meules ou autres corps abrasifs des fibres, tissus ou voiles imprégnés selon le procédé conforme à l'une quelconque des revendications précédentes.

**Claims**

1. A method for impregnating reinforcement fibres, reinforcement webs or fleeces whereby the fibres are coated with a resin, characterised in that 5 to 50% of the total amount of resin is deposited on the fibres by soaking the fibres in a thinly liquid resin respectively in a thinly liquid resin solution, whereupon 50 to 95% of the resin is deposited on the soaked fibres in powdered form, whereupon the fibres are heated to obtain fusion resp. sintering of the resin coating.

2. A method according to claim 1, characterised in that for soaking the fibres a resin solution is used in which the amount of resin is 10 to 25% of the total amount.

3. A method according to claim 1 and/or 2, characterised in that the liquid resin resp. the resin solution is a phenolic resin of the resol type.

4. A method according to claim 1 and /or 2, characterised in that the liquid resin is an epoxy resin.

5. A method according to claim 1 and/or 2, characterised in that the resin solution is a solution of phenolic resins and/or epoxy resins and/or acetic resins.

6. A method according to one of claims 1 to 5, characterised in that the resin which is deposited on the fibres in powdered form is deposited in a plurality of layers.

7. A method according to claim 6, characterised in that layers of different resins are deposited.

8. A method according to one of claims 1 to 7, characterised in that the resin of the solution and the resin deposited in powdered form are different resins.

9. A method according to one of claims 1 to 8, characterised in that as a powder a novolak resin without hardener, especially without hexamethylenetetramine, is used.

10. A method according to one of claims 1 to 9, characterised in that epoxy resins and phenolic resins are used together.

11. A method according to one of claims 1 to 10, characterised in that filler material, preferably cryolite, is added to the powdered resin.

12. A method according to claim 1, characterised in that the heating of the fibres and the fusion resp. sintering of the resin coating is accomplished by high frequency heating.

13. A method according to one of claims 1 to 12, characterised in that the powdered resin resp. the powdered components are deposited electrostatically.

14. The use of reinforcement fibres, reinforcement webs or fleeces impregnated according to one of claims 1 to 13 in grinding discs.